# EUROPÄISCHE PATENTSCHRIFT

(11) **EP 1 615 976 B1**
(45) Veröffentlichungstag und Bekanntmachung des Hinweises auf die Patenterteilung: **07.11.2007**
(21) Anmeldenummer: 04726455.1
(22) Anmeldetag: 08.04.2004
(51) Int. Cl.: C09G 3/00, C10M 105/52, C10M 105/54, C10M 105/18, C10M 105/06

(54) **TEILFLUORIERTE GLEITMITTEL FÜR FESTE OBERFLÄCHEN**
PARTIALLY FLUORINATED LUBRICANTS FOR SOLID SURFACES
LUBRIFIANTS PARTIELLEMENT FLUORES DESTINES A DES SURFACES SOLIDES

(30) Priorität: 15.04.2003 DE 10317198
(43) Veröffentlichungstag der Anmeldung: 18.01.2006
(73) Patentinhaber: Clariant Produkte (Deutschland) GmbH, 65929 Frankfurt am Main (DE)
(72) Erfinder: GROTTENMÜLLER, Ralf, 65199 Wiesbaden (DE); SCHMITT, Norbert, 84508 Burgkirschen (DE); PROBST, Anton, 84567 Erlbach (DE); SCHMID, Robert, 84524 Neuötting (DE)
(86) Internationale Anmeldenummer: PCT/EP2004/003755
(87) Internationale Veröffentlichungsnummer: WO 2004/092291

(56) Entgegenhaltungen:
- EP-A- 0 421 303
- WO-A-98/12286
- DD-A- 246 788

## Beschreibung

Die Erfindung betrifft die Verwendung teilfluorierter Verbindungen als Gleitmittel für Ski.

Skiwachse werden eingesetzt um die Gleiteigenschaften von Ski zu verbessern. Konventionelle Skiwachse enthalten im allgemeinen höhermolekulare Kohlenwasserstoffe wie Paraffine, Fettsäuren, Fettsäureester und Fettalkohole oder Mischungen dieser und ähnlicher Verbindungen. Als äußerst effektive Skiwachse haben sich bestimmte fluorierte Verbindungen erwiesen, die besonders im Hochleistungssport zum Einsatz kommen. Der Grund für die hohe Effektivität fluorierter Wachse ist die Beschichtung des Skis mit einer fluorierten Oberfläche mit sehr niedriger Oberflächenspannung, wodurch die Reibung stark vermindert wird. Durch Beschichten mit Fluorchemikalien lässt sich die Oberflächenspannung von z.B. Polyethylen (31 dyn/cm) auf Werte von 6-18 dyn/cm herabsetzen. Der Wert von 6 dyn/cm wird bei einer Oberfläche erreicht, die aus perfekt orientierten CF3-Gruppen aufgebaut ist.

Es sind bereits einige fluorierte Verbindungen bekannt, die als Gleitmittel für Ski eingesetzt werden können. WO 89/10950 beschreibt beispielsweise den Zusatz von PTFE-Mikropulver zu nicht fluorierten Skiwachsen. Das Molgewicht des PTFE liegt bevorzugt bei 50.000 - 400.000 g/mol und die Teilchengroße bei kleiner 15 µm. In EP 0 132 879 wird die Synthese von längerkettigen Perfluoralkanen der Formel F(CF₂)ₙF beschrieben, sowie deren Verwendung als Gleitmittel für Oberflächen. In EP 0 444 752 wird die Verwendung fluorierter Diblockverbindungen der allgemeinen Formel F(CF₂)ₙ-(CH₂)ₘH mit n = 3-15 und m = 5-23 als Skiwachs beschrieben. Diese Verbindungen weisen den Vorteil auf, dass sie durch den Kohlenwasserstoffblock mit nicht fluorierten Paraffin-Wachsen verträglich sind. DE 4 139 765 beschreibt Oligomere von fluorierten Olefinen der Formel F(CF₂)ₙ-CH=CH₂. Das Produkt kann durch radikalische Oligomerisierung der genannten Olefine hergestellt werden und eignet sich als Schmier- und Gleitmittel für verschiedene Oberflächen. In US 5,502,225 und DE 100 29 623 werden fluorhaltige oligomere Urethane beschrieben, die durch Addition von fluorfreien Isocyanaten und fluorierten Alkoholen als wesentliche Komponenten erhalten werden. EP 0 421 303 beschreibt die Verwendung teilfluorierter Polyacrylate. Die Herstellung erfolgt durch radikalische Copolymerisation von fluorierten Acrylaten wie z.B. 2-Perfluoralkylethyl-acrylat mit nichtfluorierten Monomeren wie z.B. langkettigen Fettalkoholacrylaten. Skiwachse können außerdem mit verschiedenen Zusätzen versehen werden, um die durch die Reibung entstehende elektrostatische Aufladung zu verhindern, die zu einem Anhaften eines Wasserfilms führen kann. So beschreibt CH 660 018 beispielsweise die Verwendung von Graphit zur Erhöhung der Leitfähigkeit.

In DD 246 788 werden diverse fluorierte Verbindungen als Schmierstoffe beschrieben, u.a. Fluoralkoxybenzol und Fluoralkylmethylether. WO 98/12286 beschreibt teilfluorierte Gleitmittel der Formel Rf-O-Rh wie zum Beispiel C₃F₇OCH₃, C₃F₇OC₂H₅, C₁₀F₂₁OCH₃ und C₁₀F₂₁OC₂H₅.

Es wurde nun gefunden, dass bestimmte teilfluorierte Verbindungen, überraschend ebenfalls als Skiwachse eingesetzt werden können. Es handelt sich um Kopplungsprodukte eines oder mehrerer Perfluoralkylreste mit einem fluorfreien Alkyl- oder Arylrest. Das Kopplungsprodukt darf außer aus Sauerstoffatomen in Form von Etherbindungen ausschließlich aus den Elementen Fluor, Kohlenstoff und Wasserstoff aufgebaut sein. Der fluorfreie Alkyl- oder Arylrest muss, sofern keine Etherbindung enthalten ist, mindestens ein mono- oder polycyclisches Strukturelement aufweisen, das gesättigt, ungesättigt, aromatisch, evtl. verzweigt und mono- oder bifunktionell sein kann.

Gegenstand der Erfindung sind Gleitmittel für feste Oberflächen, enthaltend eine teilfluorierte Verbindung der Formel 1

RF-A-B-H (1)

wobei
- RF: ein perfluorierter Rest der Formel F(CF₂)ₙ-,
- n: eine Zahl von 1 bis 20,
- A: C₁-C₃₀-, vorzugsweise C₁-C₁₈-Alkylen und
- B: Arylen mit 6 bis 14 C-Atomen oder einen gesättigten oder ungesättigten mono- oder polycyclischen Kohlenwasserstoff mit 3 bis 30, vorzugsweise 3 bis 18 C-Atomen bedeutet.

Die Synthese der Verbindungen der obigen Formel kann prinzipiell auf mehrere Arten erfolgen. Am gebräuchlichsten ist die Addition von Perfluoralkyliodiden an olefinische Doppelbindungen, z.B. radikalisch oder metallkatalysiert und Substitutionsreaktion von Perfluoralkyliodiden an aromatischen Systemen, die z.B. metallkatalysiert durchgeführt werden. Selbstverständlich sind auch andere, hier nicht genannte, dem Fachmann aber hinreichend bekannte Arten, Perfluoralkylreste mit fluorfreien Verbindungen zu verknüpfen, möglich.

Überraschenderweise wurde nun gefunden, dass die oben beschriebenen Verbindungen hervorragend zur Beschichtung von Ski zur Verbesserung der Gleiteigenschaften geeignet sind. Der Effekt lässt sich vermutlich darauf zurückführen, dass die Fluorreste sich zur Luft hin orientieren und durch die so gebildete CF₃-Oberflächenbelegung eine energiearme Oberfläche mit sehr niedriger Oberflächenspannung und zugleich guten Gleiteigenschaften entsteht.

Je nach Schnee und Wetterbedingungen sind die Anforderungen an die physikalischen und chemischen Eigenschaften eines Skiwachses stark unterschiedlich. Durch geeignete Wahl des fluorierten- und des fluorfreien Wirkstoffteils lassen sich die physikalisch-chemischen Eigenschaften in weiten Grenzen leicht variieren und an die Erfordernisse anpassen. Es können auch Kombinationen von zwei oder mehreren der beschriebenen Wirkstoffe eingesetzt werden. Langkettige Perfluoralkylreste ≥ C₈F₁₇ erhöhen z.B. die Härte des Wirkstoffs. Durch den vorhandenen fluorfreien Teil kann zudem eine Mischbarkeit bzw. Verträglichkeit mit fluorfreien Skiwachsen erzielt werden.

Die beschriebenen Verbindungen können in an sich bekannter Weise auf die Gleitfläche des Ski aufgebracht werden beispielsweise durch Aufschmelzen dieser Verbindungen, somit sie in fester Form vorliegen, mit einem heißen Eisen und Auftrag auf den Ski. Alternativ hierzu können die beschriebenen Verbindungen als Lösung in einem oder mehreren organischen Lösemitteln, vorzugsweise in einer Konzentration von 0,5 - 5 % oder als Feststoff auf den Ski aufgebracht werden. Soll das Wachs in Form einer Lösung verwendet werden, muss ein geeignetes Lösungsmittel gewählt werden, abhängig vom Fluorgehalt. Bei hohem Fluorgehalt kann es erforderlich sein fluorierte Lösemittel wie z.B. Perfluorhexan, 1 H-Perfluorhexan oder Frigen-Typen zu verwenden. Bei niedrigem Fluorgehalt eignen sich auch nicht fluorierte Lösemittel wie z.B. Ethylacetat, Butylacetat oder THF. Es können auch Gemische aus zwei oder mehreren Lösungsmitteln eingesetzt werden. Weiterhin ist es möglich den Wirkstoff in Form einer Suspension oder Dispersion anzuwenden. Die beschriebenen fluorierten Verbindungen können allein oder in Mischung mit anderen fluorierten oder nichtfluorierten Skiwachsen kombiniert werden.

Die beschriebenen fluorierten Wirkstoffe eignen sich nicht nur als Skiwachse, sondern außerdem zur Beschichtung von Oberflächen der verschiedensten Art wie z.B. Metall, Kunststoff und Glas. Durch die Beschichtung wird ein hydro- und oleophober Film auf die entsprechende Oberfläche aufgebracht, der die Reibung stark herabsetzt.

### Beispiele

### Synthese

Die Verbindung 1 - 6 wurden synthetisiert durch radikalische Addition von Perfluoralkyliodid an C-C Doppelbindungen mit nachfolgender Hydrodehalogenierung, nach Reaktionsschema I und folgender allgemeinen Vorschrift.

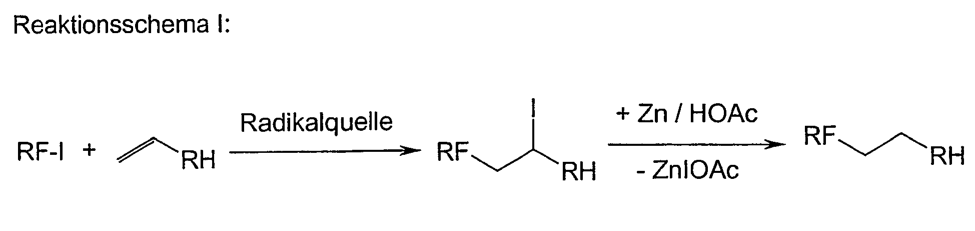

### Allgemeine Vorschrift für die Synthese der Verbindungen 1-6 :

Perfluoralkyliodid und Olefinkomponente werden im Molverhältnis 1:1 mit 5 Mol-% Percarbonat bzw. Peroxyd Radikalstarter (z.B. Dilaurylperoxyd) 2 h bei 100-110°C reagiert. Dann werden weitere 5 Mol-% Radikalstarter zugegeben und erneut 2 h bei 100-110°C reagiert. Nach Abkühlen auf Raumtemperatur wird die 1,5-fache Masse Isopropanol, die 0,5-fache Masse Essigsäure sowie 150 Mol-% Zinkpulver zugegeben und 1 h gerührt. Dann werden weitere 3 h unter Rückflussbedingungen reagiert. Nach Abfiltrieren unlöslicher Anteile wird das Lösemittel abgezogen und der Rückstand im Hochvakuum von nicht umgesetzte Edukte und Nebenprodukte befreit. Die Reinheit des Produkts liegt zwischen 85 und 95 %.

### Synthese von Verbindung 7

Verbindung 7 wurde nach einer Vorschrift aus "J.Org.Chem. 6, (2002), S.7185-7192" durch Kopplung von 2 Mol RFI und einem Mol Biphenyl mit Kupfer in DMSO als Lösemittel hergestellt.

### Synthese von Verbindung 8

Verbindung 8 wurde nach einer Vorschrift aus "Organikum, Wiley-VCH, 21. Auflage, 2001, S.375" durch Friedel-Crafts Alkylierung von Perfluoralkylpropylchlorid (Hergestellt durch Umsetzung von 3-Perfluoralkyf-1-propanol und Thionylchlorid) und Decylbenzol katalysiert mit Aluminiumchlorid hergestellt.

### Synthese von Verbindung 9

Verbindung 9 wurde nach einer Vorschrift in Anlehnung an "Organikum, Wiley-VCH, 21.Auflage, 2001, S.239" durch Umsetzung von Perfluoralkylpropyltosylat (Hergestellt durch Umsetzung von 3-Perfluoralkyl-1-propanol mit p-Toluolsulfonsäurechlorid) und Dodecylphenol in Aceton mit Kaliumcarbonat hergestellt.

### Beispiele

### Verbindung 1:

Produkt aus RFI (RF = F(CF₂)ₙ, n = 63 % 10, 30 % 12, 7 % ≥14) und Styrol

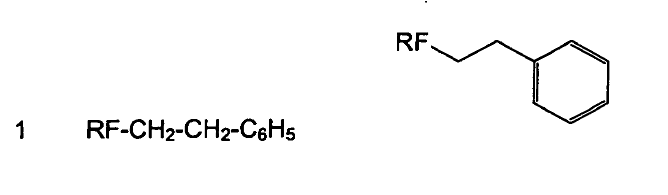

### Verbindung 2:

Produkt aus RFI (RF = F(CF₂)ₙ, n = 63 % 10, 30 % 12, 7 % ≥ 14) und 4-Phenyl-1-buten

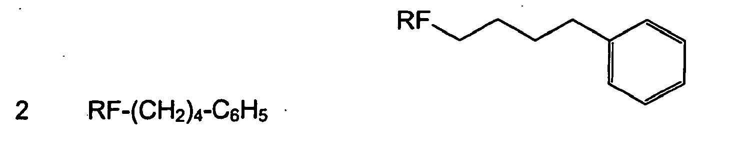

### Verbindung 3: (Vergleichsbeispiel)

Produkt aus RFI (RF = F(CF₂)ₙ, n = 8) und 3-Butenyl-dodecylether

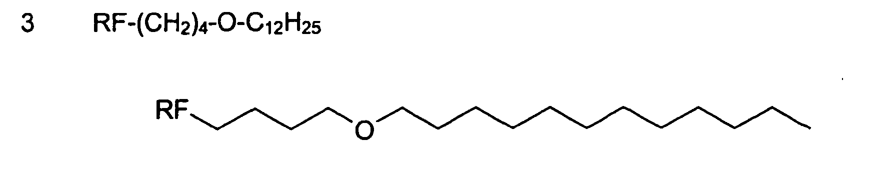

### Verbindung 4:

Produkt aus RFI (RF = F(CF₂)ₙ, n = 63 % 10, 30 % 12, 7 % ≥14) und β-Pinen

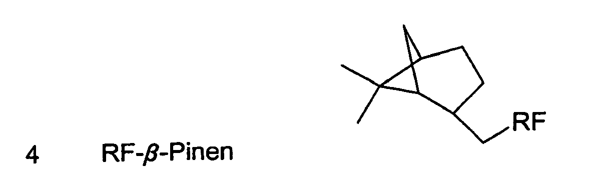

### Verbindung 5: (Vergleichsbeispiel)

Produkt aus RFI (RF = F(CF₂)ₙ, n = 63% 10, 30% 12, 7% ≥14) und Cycloocten

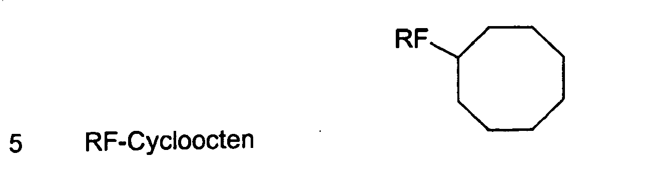

### Verbindung 6: (Vergleichsbeispiel)

Produkt aus RFI (RF = F(CF₂)ₙ, n = 8) und 3-Butenyl-(Dodecylphenyl)ether

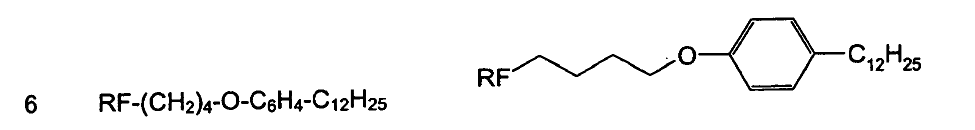

### Verbindung 7: (Vergleichsbeispiel)

Produkt aus 2 mol RFI (RF = F(CF₂)ₙ, n = 8) und 1 mol Biphenyl

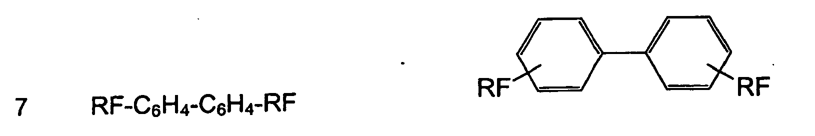

### Verbindung 8: (Vergleichsbeispiel)

Produkt aus Perfluoralkylpropylchlorid und Decylbenzol (RF = F(CF₂)ₙ, n = 7 % 6, 63% 8, 28% 10,2 % ≥12).

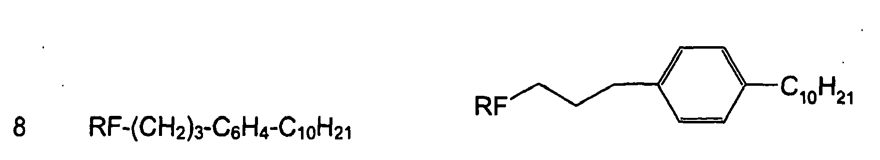

### Verbindung 9: (Vergleichsbeispiel)

Produkt aus Perfluoralkylpropyltosylat und Dodecylphenol (RF = F(CF₂)ₙ, n = 7% 6, 63% 8, 28% 10,2% ≥12).

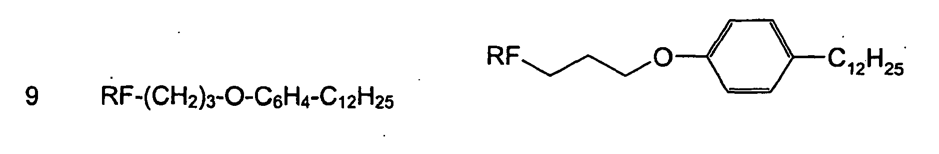

## Patentansprüche

1. Gleitmittel für feste Oberflächen, enthaltend eine teilfluorierte Verbindung der Formel 1
RF - A - B - H (1)
wobei
RF ein perfluorierter Rest der Formel F(CF₂)ₙ-,
n eine Zahl von 1 bis 20,
A C₁-C₃₀-, vorzugsweise C₁-C₁₈-Alkylen und
B Arylen mit 6 bis 14 C-Atomen oder einen gesättigten oder ungesättigten mono- oder polycyclischen Kohlenwasserstoff mit 3 bis 30, vorzugsweise 3 bis 18 C-Atomen bedeutet.

2. Gleitmittel nach Anspruch 1, **dadurch gekennzeichnet, dass** es sich um ein Skiwachs handelt.

3. Gleitmittel nach Anspruch 1, **dadurch gekennzeichnet, dass** das Gleitmittel als Feststoff, als Lösung oder als Dispersion vorliegt.

4. Gleitmittel nach Anspruch 1, **dadurch gekennzeichnet, dass** das Gleitmittel weitere fluorierte oder nichtfluorierte Gleitmittel enthält.

## Claims

1. A lubricant for solid surfaces, comprising a partially fluorinated compound of formula 1
RF-A-B-H (1)
where
RF is a perfluorinated radical of formula F(CF₂)ₙ-,
n is a number from 1 to 20,
A is C₁-C₃₀, preferably C₁-C₁₈, alkylene, and
B is arylene having 6 to 14 carbon atoms or is a saturated or unsaturated monocyclic or polycyclic hydrocarbon having 3 to 30, preferably 3 to 18 carbon atoms.

2. The lubricant as claimed in claim 1, which is ski wax.

3. The lubricant as claimed in claim 1, in the form of a solid, a solution or a dispersion.

4. The lubricant as claimed in claim 1, comprising further fluorinated or nonfluorinated lubricants.

## Revendications

1. Lubrifiant pour surfaces dures, contenant un composé partiellement fluoré de formule 1
RF-A-B-H (1)
dans laquelle :
RF désigne un radical perfluoré de formule F (CF₂)ₙ-,
n désigne un nombre de 1 à 20,
A désigne des groupes alkyle en C₁-C₃₀, de préférence en C₁-C₁₈ et
B désigne des groupes aryle ayant 6 à 14 atomes de carbone ou un hydrocarbure monocyclique ou polycyclique saturé ou insaturé ayant 3 à 30, de préférence, 3 à 18 atomes de carbone.

2. Lubrifiant selon la revendication 1, **caractérisé en ce qu'**il s'agit d'un fart.

3. Lubrifiant selon la revendication 1, **caractérisé en ce que** le lubrifiant se présente sous forme de matière solide, de solution ou de dispersion.

4. Lubrifiant selon la revendication 1, **caractérisé en ce que** le lubrifiant contient d'autres lubrifiants fluorés ou non fluorés.
